# EUROPÄISCHE PATENTSCHRIFT

(11) **EP 4 428 386 B1**
(45) Veröffentlichungstag und Bekanntmachung des Hinweises auf die Patenterteilung: **19.08.2026**
(21) Anmeldenummer: 24156221.4
(22) Anmeldetag: 07.02.2024
(51) Int. Cl.: F16D 27/118, B60K 1/00, F16D 11/00, F16H 57/00

(54) **WELLENANORDNUNG, ANTRIEBSANORDNUNG UND FAHRZEUG**
SHAFT ARRANGEMENT, DRIVE ARRANGEMENT AND VEHICLE
ENSEMBLE ARBRE, ENSEMBLE D'ENTRAÎNEMENT ET VÉHICULE

(30) Priorität: 09.03.2023 DE 102023202095
(43) Veröffentlichungstag der Anmeldung: 11.09.2024
(73) Patentinhaber: Robert Bosch GmbH, 70442 Stuttgart (DE)
(72) Erfinder: Mohamed, Wael, Shanghai, 201206 (CN); Schlittenbauer, Tobias, 71732 Tamm (DE)

(56) Entgegenhaltungen:
- DE-A1- 102014 213 924
- DE-A1- 102021 208 600
- FR-A1- 2 897 404

## Beschreibung

### Stand der Technik

Die Erfindung betrifft eine Wellenanordnung mit Merkmalen des Anspruchs 1, eine Antriebsanordnung mit Merkmalen des Anspruchs 8 und ein Fahrzeug mit Merkmalen des Anspruchs 10.

In Getrieben finden Losräder Anwendung, welche an eine Welle an- oder abgekoppelt werden können. Diese Losräder weisen in der Regel eine Schrägverzahnung auf. Im angekoppelten Zustand werden sie je nach Lastrichtung (Schub oder Zug) axial in die eine oder andere Richtung gedrängt bzw. bewegt. Zur Abstützung bzw. Aufnahme der dabei wirkenden Axialkräfte werden Stützscheiben verwendet.

Die Stützscheiben werden in der Regel mit einem axialen und radialen Spiel verbaut. Nachteilig dabei ist, dass wenn die Stützscheiben im abgekoppelten Betrieb (Schleppen / Schub) entlastet sind, diese zu Schwingungen angeregt werden und unerwünschte Geräusche verursachen können. Die Stützscheiben können alternativ auf die Welle aufgepresst werden. Dies ist aufgrund enger Toleranzen und der hierfür aufwändigen Montage/Demontage sehr kostspielig.

Aus der DE 10 2021 208 600 A1 ist eine Wellenanordnung für eine Antriebsanordnung bekannt, wobei die Wellenanordnung eine Welle, ein Losrad, ein Koppelelement und ein Kupplungselement umfasst, wobei das Koppelelement drehfest mit dem Losrad gekoppelt ist, wobei das Kupplungselement drehfest mit der Welle gekoppelt ist und entlang einer Axialrichtung zwischen einer gekoppelten Position und einer entkoppelten Position beweglich ist, wobei in der gekoppelten Position das Losrad mit der Welle drehfest gekoppelt ist, wobei in der entkoppelten Position das Losrad auf der Welle frei drehbar ist.

Aus der DE 10 2014 213 924 A1 ist eine Lagereinrichtung für ein Kupplungssystem eines Kraftfahrzeugs bekannt, wobei die Lagereinrichtung mit einer Getriebeeingangswelle und einer Druckplatte versehen ist, wobei die Druckplatte mit Hilfe eines Lagerelementes an der Getriebeeingangswelle gelagert ist, wobei ein Sicherungselement zur Sicherung des Lagerelementes auf der Getriebeeingangswelle vorgesehen ist und wobei zwischen dem Lagerelement und dem Sicherungselement ein Dämpfungselement angeordnet ist.

### Offenbarung der Erfindung

Erfindungsgemäß wird eine Wellenanordnung, insbesondere für eine Antriebsanordnung, vorgeschlagen. Die Wellenanordnung umfasst eine Welle, ein Losrad und ein Koppelelement. Das Koppelelement ist drehfest mit dem Losrad gekoppelt. Das Koppelelement kann drehfest auf dem Losrad angeordnet sein. Die Wellenanordnung umfasst weiter ein Kupplungselement. Das Kupplungselement ist drehfest mit der Welle gekoppelt und entlang einer Axialrichtung zwischen einer gekoppelten Position und einer entkoppelten Position beweglich. In der gekoppelten Position ist das Losrad mit der Welle drehfest gekoppelt. In der entkoppelten Position ist das Losrad auf der Welle frei drehbar (bzw. von der Welle entkoppelt). Die Wellenanordnung umfasst weiter eine Stützscheibe zum axialen Stützen des Losrads (bzw. zur Aufnahme von axialen Kräften). Die Stützscheibe ist axial benachbart zum Losrad auf der Welle angeordnet. Die Stützscheibe weist ein elastisches Dämpfungselement auf. Das Dämpfungselement kann aus einem elastischen Material bestehen oder elastisches Material umfassen. Das elastische Material kann Gummi und/oder ein Elastomer sein. Die Stützscheibe kann zumindest abschnittsweise ein elastisches Dämpfungselement aufweisen. Die Stützscheibe kann zumindest teilweise elastisch ausgebildet sein. Das Dämpfungselement ist an einer radialen Innenseite (bzw. dem Innenumfang) der Stützscheibe angeordnet. Das Dämpfungselement kann an der radialen Innenseite (bzw. dem Innenumfang) der Stützscheibe befestigt sein, bspw. durch Kleben. Die Stützscheibe kann an ihrer radialen Innenseite (bzw. dem Innenumfang) elastisch ausgebildet sein. Der Innendurchmesser der Stützscheibe und/oder des Dämpfungselements kann in einem unbelasteten Zustand geringer sein als der Außendurchmesser der Welle am Aufnahmeort des Dämpfungselements.

Vorteilhaft kann ein Schwingen der Stützscheibe und die damit verbundenen, unerwünschten Geräusche verhindert oder zumindest reduziert werden. Zudem kann die Stützscheibe einfach montiert bzw. demontiert werden. Ein Mehraufwand bei der Montage bzw. Demontage kann somit verhindert werden. Es ist eine Handmontage der Stützscheibe möglich. Ein Auffpressen der Stützscheibe auf die Welle ist nicht nötig. Damit kann mit einfachen und kostengünstigen Mitteln eine Stützscheibe zur Aufnahme von axialen Kräften eines Losrads bereitgestellt werden. Außerdem ist eine einfache Handmontage der Stützscheibe möglich. Ein Schwingen der Stützscheibe, das insbesondere durch Vibrationen, die über die Welle an die Stützscheibe übertragen werden, verursacht wird, und die damit verbundenen, unerwünschten Geräusche können verhindert oder zumindest reduziert werden.

Vorliegend ist mit "axial" bzw. "Axialrichtung" eine entlang der Mittellängsachse bzw. parallel zur Mittellängsachse der Welle ausgerichtete Richtung gemeint. Mit anderen Worten, die Mittellängsachse der Welle ist entlang der Axialrichtung orientiert. Entsprechend ist mit "radial" bzw. "Radialrichtung" eine senkrecht zur Mittellängsachse der Welle ausgerichtete und von der Mittellängsachse der Welle ausgehende Richtung gemeint.

Gemäß einer Weiterbildung kann das Dämpfungselement als eine Gummierung ausgebildet sein. Die Stützscheibe kann eine Gummierung aufweisen.

Hierdurch können das Dämpfungselement bzw. eine teilweise elastische Stützscheibe mit einfachen Mitteln realisiert werden.

Gemäß einer Weiterbildung kann die Wellenanordnung einen Sicherungsring umfassen. Der Sicherungsring kann in eine auf der Welle angeordnete Nut eingreifen. Der Sicherungsring kann eingerichtet sein, um die Stützscheibe axial zu sichern. Der Sicherungsring kann an einer von dem Losrad abgewandten Seite des Stützscheibe angeordnet sein.

Hierdurch kann die Stützscheibe mit einfachen Mitteln axial gesichert werden.

Gemäß einer Weiterbildung kann die Wellenanordnung eine Führungsnabe aufweisen. Die Führungsnabe kann mit der Welle drehfest gekoppelt sein. Die Führungsnabe kann auf der Welle angeordnet sein. Das Kupplungselement kann mittels der Führungsnabe mit der Welle drehfest gekoppelt sein.

Hierdurch kann mit einfachen Mitteln eine sichere drehfeste Kopplung des Kupplungselements und damit des Losrads mit der Welle umgesetzt werden.

Gemäß einer Weiterbildung kann die Wellenanordnung ein Zahnrad umfassen. Das Zahnrad kann als ein Festrad ausgebildet sein. Das Zahnrad kann mit der Welle drehfest gekoppelt sein. Das Zahnrad kann auf der Welle angeordnet sein. Das Zahnrad kann zur Kopplung der Welle eingerichtet sein. Das Zahnrad kann zur Drehmomentübertragung mittels der Welle dienen.

Hierdurch kann mit einfachen Mitteln eine Kopplung der Welle zur Drehmomentübertragung umgesetzt werden.

Gemäß einer Weiterbildung können die Führungsnabe und/oder das Zahnrad einstückig (bzw. einteilig) mit der Welle ausgebildet sein.

Hierdurch kann eine robuste Wellenanordnung realisiert werden. Zudem kann die Herstellung einer derartigen Wellenanordnung vereinfacht werden. Des weiteren kann die Anzahl der Komponenten und damit die Komplexität der Wellenanordnung reduziert werden.

Erfindungsgemäß wird eine Antriebsanordnung für ein Fahrzeug, insbesondere ein Kraftfahrzeug, mit einer Wellenanordnung gemäß obiger Ausführungen vorgeschlagen. Hinsichtlich der damit erzielbaren Vorteile wird auf die diesbezüglichen Ausführungen zur Wellenanordnung verwiesen. Zur weiteren Ausgestaltung der Antriebsanordnung können die im Zusammenhang mit der Wellenanordnung beschriebenen und/oder die nachfolgend noch erläuterten Maßnahmen dienen.

Gemäß einer Weiterbildung kann die Antriebsanordnung eine Antriebswelle umfassen. Die Antriebswelle kann mit der Welle (drehfest) koppelbar oder gekoppelt sein. Bei der Welle kann es sich um eine Zwischenwelle der Antriebsanordnung handeln. Die Antriebsanordnung kann ein Differential mit einem Differentialrad umfassen. Das Differentialrad kann mit der Welle (drehfest), insbesondere mittels des Losrads, koppelbar oder gekoppelt sein. Die Antriebsanordnung kann mindestens eine Abtriebswelle umfassen. Die Abtriebswelle kann mit dem Differential, insbesondere mit dem Differentialrad, (drehfest) koppelbar oder gekoppelt sein. Die Antriebsanordnung kann zudem eine elektrische Maschine aufweisen. Die Antriebswelle kann mittels der elektrischen Maschine antreibbar sein. Die Antriebsanordnung kann bspw. als E-Achse ausgebildet sein oder Bestandteil einer E-Achse bilden.

Hierdurch lässt sich mit einfachen Mitteln eine robuste Antriebsanordnung umsetzen.

Erfindungsgemäß wird ein Fahrzeug, insbesondere ein Kraftfahrzeug, mit einer Antriebsanordnung gemäß obiger Ausführungen vorgeschlagen. Hinsichtlich der damit erzielbaren Vorteile wird auf die diesbezüglichen Ausführungen zur Antriebsanordnung verwiesen. Zur weiteren Ausgestaltung des Fahrzeugs können die im Zusammenhang mit der Antriebsanordnung beschriebenen und/oder die nachfolgend noch erläuterten Maßnahmen dienen.

Nachfolgend werden Ausführungsformen der Erfindung unter Bezugnahme auf die beiliegenden Zeichnungen erläutert. Es zeigen schematisch:
- Figur 1: eine Darstellung einer Antriebsanordnung mit einer Wellenanordnung;
- Figur 2: eine perspektivische Ansicht der Wellenanordnung gemäß Figur 1;
- Figur 3: eine Schnittdarstellung der Wellenanordnung gemäß Figur 2; und
- Figur 4: eine vergrößerte Ansicht eines Ausschnitts aus Figur 3.

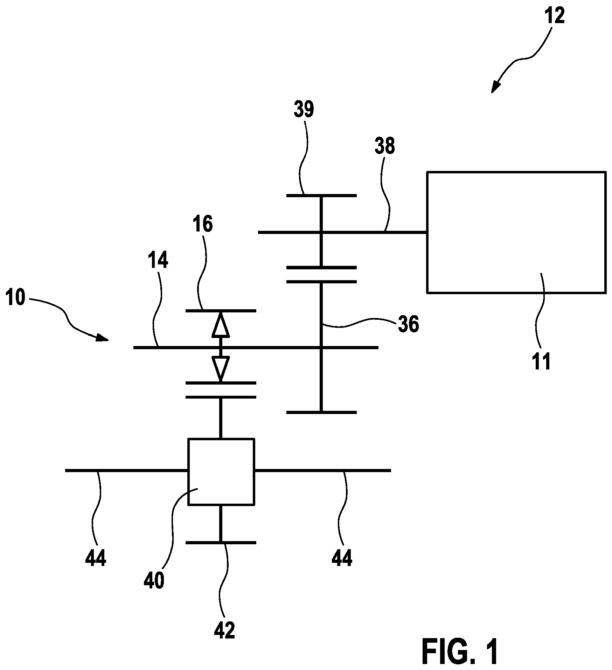

Die Antriebsanordnung trägt in Figur 1 insgesamt das Bezugszeichen 12. Die Antriebsanordnung 12 ist vorliegend als E-Achse ausgebildet. Die Antriebsanordnung 12 kann zum Antrieb eines Fahrzeugs, insbesondere eines Kraftfahrzeugs, eingerichtet sein. Die Antriebsanordnung 12 umfasst eine elektrische Maschine 11 mit einer Antriebswelle 38 und einem Antriebszahnrad 39 (bzw. Antriebsritzel). Die Antriebsanordnung 12 umfasst eine Wellenanordnung 10, mit einer Welle 14, einem Losrad 16 und einem Zahnrad 36. Bei der Welle 14 handelt es sich vorliegend um eine Zwischenwelle der Antriebsanordnung 12.

Vorliegend ist das Antriebszahnrad 39 drehfest mit der Antriebswelle 38 gekoppelt, insbesondere auf der Antriebswelle 38 angeordnet. Das Zahnrad 36 ist vorliegend drehfest mit der Welle 14 gekoppelt, insbesondere auf der Welle 14 angeordnet. Das Antriebszahnrad 39 und das Zahnrad 36 kämmen miteinander. Die Welle 14 ist so trieblich mit der Antriebswelle 38 gekoppelt. Mit anderen Worten, die Welle 14 kann mittels der Antriebswelle 38 angetrieben werden.

Das Losrad 16 kann in einem gekoppelten Zustand mit der Welle 14 drehfest gekoppelt werden. In einem entkoppelten Zustand kann das Losrad auf der Welle 14 frei drehbar sein (von der Welle 14 entkoppelt werden). Das Losrad 16 ist hierzu mittels Wälzlagern, bspw. Nadellagern, drehbar auf der Welle 14 gelagert.

Die Antriebsanordnung 12 umfasst vorliegend ein Differential 40 mit einem Differentialrad 42. Das Differentialrad 42 bzw. das Differential 40 können mit der Welle 14 über das Losrad 16 gekoppelt werden. Die Antriebsanordnung 12 weist vorliegend zwei Abtriebswellen 44 auf, die mit dem Differential 40, insbesondere mit dem Differentialrad 42, drehfest koppelbar sind.

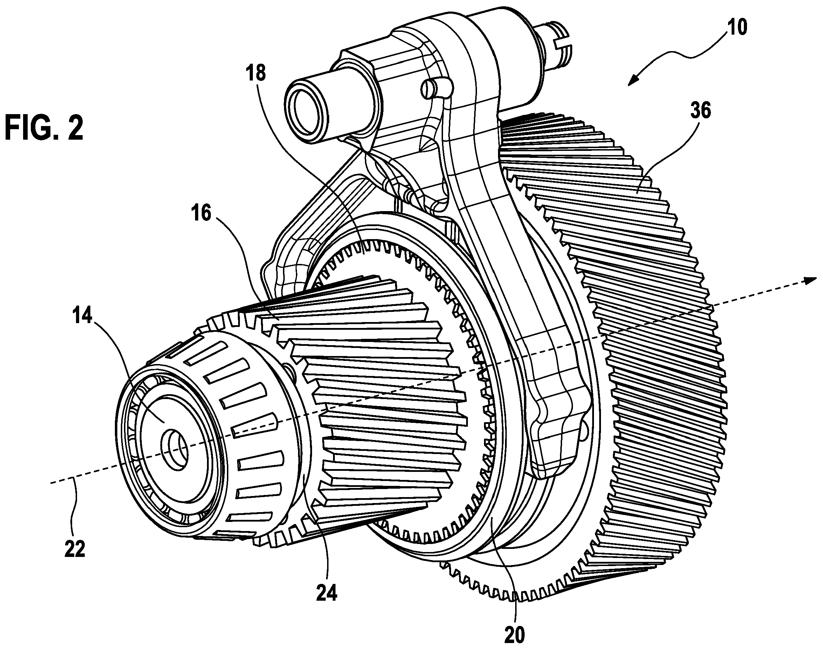

Figur 2 zeigt eine perspektivische Ansicht der Wellenanordnung 10 gemäß Figur 1. Die Wellenanordnung 10 umfasst ein Koppelelement 18. Das Koppelelement 18 ist drehfest mit dem Losrad 16 gekoppelt. Vorliegend ist das Koppelelement 18 auf dem Losrad 16 angeordnet. Die Wellenanordnung 10 umfasst weiter ein Kupplungselement 20. Das Kupplungselement 20 ist drehfest mit der Welle 14 gekoppelt. Das Kupplungselement 20 ist entlang einer Axialrichtung 22 zwischen einer gekoppelten Position und einer entkoppelten Position beweglich. In der gekoppelten Position des Kupplungselements 20 ist das Losrad 16 mit der Welle 14 drehfest gekoppelt. In der entkoppelten Position des Kupplungselements 20 ist das Losrad 16 auf der Welle 14 frei drehbar.

Die Wellenanordnung 10 umfasst eine Stützscheibe 24 zum axialen Stützen des Losrads 16. Mit anderen Worten, die Stützscheibe 24 ist zum Aufnehmen axialer Kräfte eingerichtet. Die Stützscheibe 24 ist axial benachbart zum Losrad 16 auf der Welle 14 angeordnet.

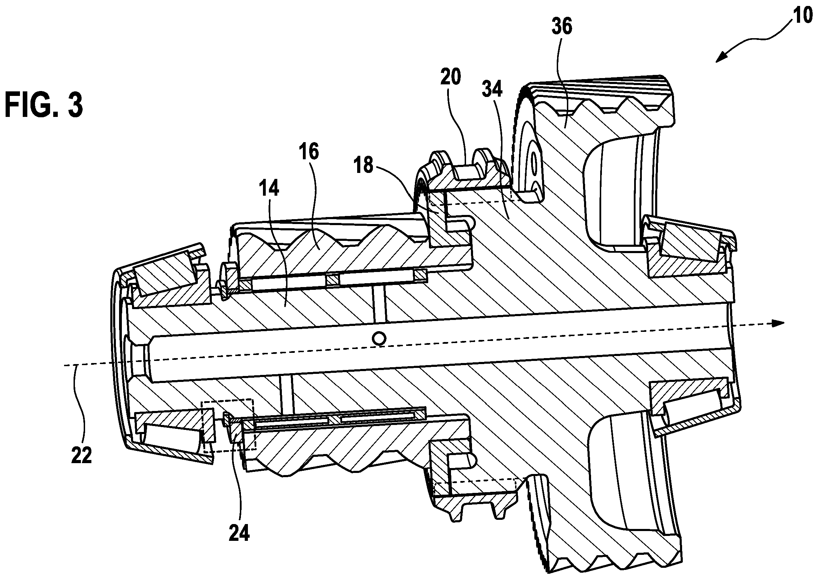

Figur 3 zeigt eine Schnittdarstellung der Wellenanordnung 10 gemäß Figur 2. Die Wellenanordnung 10 umfasst eine Führungsnabe 34. Die Führungsnabe 34 ist mit der Welle 14 drehfest gekoppelt. Vorliegend ist die Führungsnabe 34 auf der Welle 14 angeordnet. Das Kupplungselement 20 ist mittels der Führungsnabe 34 mit der Welle 14 drehfest gekoppelt.

Die Führungsnabe 34 weist vorliegend eine Außenverzahnung (nicht dargestellt) und das Kupplungselement 20 eine Innenverzahnung (nicht dargestellt) auf. Das Kupplungselement 20 ist drehfest auf der Führungsnabe 34 angeordnet, wobei die Innenverzahnung des Kupplungselements 20 und die Außenverzahnung der Führungsnabe 34 miteinander in Eingriff sind. Das Koppelelement 18 weist eine Außenverzahnung (nicht dargestellt) auf. In der gekoppelten, in Figur 3 dargestellten, Position des Kupplungselements 20 ist die Innenverzahnung des Kupplungselements 20 und die Außenverzahnung des Koppelelements 18 miteinander in Eingriff. Wird das Kupplungselement 20 in Figur 3 nach rechts, entlang der Axialrichtung 22, in die entkoppelte Position bewegt, so sind die Innenverzahnung des Kupplungselements 20 und die Außenverzahnung des Koppelelements 18 nicht mehr miteinander in Eingriff.

Vorliegend ist die Welle 14, die Führungsnabe 34 und das Zahnrad 36 einstückig ausgebildet. Es ist ebenso denkbar, dass die Welle 14, die Führungsnabe 34 und das Zahnrad 36 jeweils als separate Bauteile ausgebildet sein können.

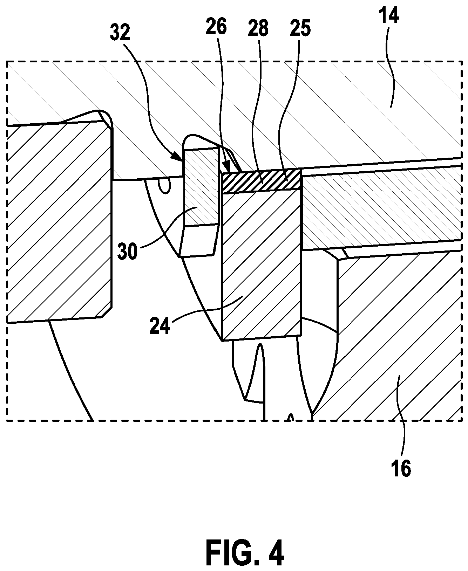

Figur 4 zeigt eine vergrößerte Ansicht eines Ausschnitts aus Figur 3. Der in Figur 4 vergrößerte Ausschnitt, ist in Figur 3 mittels einer gestrichelten Umrandung markiert. Erfindungsgemäß weist die Stützscheibe 24 ein elastisches Dämpfungselement 25 auf. Ebenso ist es denkbar, dass die Stützscheibe 24 zumindest bereichsweise elastisch ausgebildet ist.

Das Dämpfungselement 25 ist erfindungsgemäß an einer radialen Innenseite 26 der Stützscheibe 24 angeordnet. Das Dämpfungselement 25 ist vorliegend als eine Gummierung 28 ausgebildet. Ebenso ist es denkbar, dass die Stützscheibe 24 an ihrer radialen Innenseite 26 elastisch ausgebildet sein kann. Die Stützscheibe 24 kann an ihrer radialen Innenseite 26 eine Gummierung 28 aufweisen.

Die Wellenanordnung 10 umfasst einen Sicherungsring 30. An der Welle 14 ist eine Nut 32 ausgebildet, in die der Sicherungsring 30 eingreift. Der Sicherungsring 30 sichert die Stützscheibe 24 axial. Der Sicherungsring 30 ist an einer dem Losrad 16 abgewandten Seite der Stützscheibe 24 angeordnet.

## Patentansprüche

1. Wellenanordnung (10), insbesondere für eine Antriebsanordnung (12), wobei die Wellenanordnung (10) umfasst:
- eine Welle (14),
- ein Losrad (16),
- ein Koppelelement (18), wobei das Koppelelement (18) drehfest mit dem Losrad (16) gekoppelt, insbesondere auf dem Losrad (16) angeordnet, ist,
- ein Kupplungselement (20), wobei das Kupplungselement (20) drehfest mit der Welle (14) gekoppelt ist und entlang einer Axialrichtung (22) zwischen einer gekoppelten Position und einer entkoppelten Position beweglich ist, wobei in der gekoppelten Position das Losrad (16) mit der Welle (14) drehfest gekoppelt ist, wobei in der entkoppelten Position das Losrad (16) auf der Welle (14) frei drehbar ist, **gekennzeichnet, durch**
- eine Stützscheibe (24) zum axialen Stützen des Losrads (16), wobei die Stützscheibe (24) axial benachbart zum Losrad (16) auf der Welle (14) angeordnet ist,
- wobei die Stützscheibe (24) ein elastisches Dämpfungselement (25) aufweist
- und wobei das Dämpfungselement (25) an einer radialen Innenseite (26) der Stützscheibe (24) angeordnet ist.

2. Wellenanordnung (10) nach dem voranstehenden Anspruch, **dadurch gekennzeichnet, dass** das Dämpfungselement (25) als eine Gummierung (28) ausgebildet ist.

3. Wellenanordnung (10) nach einem der voranstehenden Ansprüche, **dadurch gekennzeichnet, dass** die Wellenanordnung (10) einen Sicherungsring (30) umfasst, der in eine Nut (32) in der Welle (14) eingreift, um die Stützscheibe (24) axial zu sichern.

4. Wellenanordnung (10) nach einem der voranstehenden Ansprüche, **dadurch gekennzeichnet, dass** die Wellenanordnung (10) eine Führungsnabe (34) aufweist, wobei die Führungsnabe (34) mit der Welle (14) drehfest gekoppelt, insbesondere auf der Welle (14) angeordnet, ist, wobei das Kupplungselement (20) mittels der Führungsnabe (34) mit der Welle (14) drehfest gekoppelt ist.

5. Wellenanordnung (10) nach einem der voranstehenden Ansprüche, **dadurch gekennzeichnet, dass** die Wellenanordnung (10) ein Zahnrad (36) umfasst, wobei das Zahnrad (36) mit der Welle (14) drehfest gekoppelt, insbesondere auf der Welle (14) angeordnet, ist.

6. Wellenanordnung (10) nach Anspruch 4 und/oder 5, **dadurch gekennzeichnet, dass** die Führungsnabe (34) und/oder das Zahnrad (36) einstückig mit der Welle (14) ausgebildet sind.

7. Antriebsanordnung (12) für ein Fahrzeug, insbesondere ein Kraftfahrzeug, mit einer Wellenanordnung (10) nach einem der voranstehenden Ansprüche.

8. Antriebsanordnung (12) nach Anspruch 7, **dadurch gekennzeichnet, dass** es sich bei der Welle (14) um eine Zwischenwelle handelt und die Antriebsanordnung (12) umfasst:
- eine Antriebswelle (38), wobei die Antriebswelle (38) mit der Welle (14) koppelbar oder gekoppelt ist,
- ein Differential (40) mit einem Differentialrad (42), wobei das Differentialrad (42) mit der Welle (14), insbesondere mittels des Losrads (16) koppelbar oder gekoppelt ist,
- insbesondere mindestens eine Abtriebswelle (44), wobei die Abtriebswelle (44) mit dem Differential (40), insbesondere mit dem Differentialrad (42), koppelbar oder gekoppelt ist.

9. Fahrzeug, insbesondere Kraftfahrzeug, mit einer Antriebsanordnung (12) nach einem der beiden voranstehenden Ansprüche.

## Claims

1. Shaft arrangement (10), in particular for a drive arrangement (12), the shaft arrangement (10) comprising:
- a shaft (14),
- an idler gear (16),
- a coupling element (18), wherein the coupling element (18) is coupled rotationally conjointly to the idler gear (16), in particular is arranged rotationally conjointly on the idler gear (16),
- a clutch element (20), wherein the clutch element (20) is coupled rotationally conjointly to the shaft (14) and is movable along an axial direction (22) between a coupled position and a decoupled position, wherein the idler gear (16) is coupled rotationally conjointly to the shaft (14) in the coupled position, wherein the idler gear (16) is freely rotatable on the shaft (14) in the decoupled position, **characterized by**
- a supporting disc (24) for axially supporting the idler gear (16), wherein the supporting disc (24) is arranged on the shaft (14) axially adjacent to the idler gear (16),
- wherein the supporting disc (24) has an elastic damping element (25),
- and wherein the damping element (25) is arranged on a radial inner side (26) of the supporting disc (24).

2. Shaft arrangement (10) according to the preceding claim, **characterized in that** the damping element (25) is in the form of a rubber coating (28).

3. Shaft arrangement (10) according to either of the preceding claims, **characterized in that** the shaft arrangement (10) comprises a securing ring (30) which engages into a groove (32) in the shaft (14) so as to axially secure the supporting disc (24).

4. Shaft arrangement (10) according to one of the preceding claims, **characterized in that** the shaft arrangement (10) has a guide hub (34), wherein the guide hub (34) is coupled rotationally conjointly to the shaft (14), in particular is arranged on the shaft (14), wherein the clutch element (20) is coupled rotationally conjointly to the shaft (14) by means of the guide hub (34).

5. Shaft arrangement (10) according to one of the preceding claims, **characterized in that** the shaft arrangement (10) comprises a gearwheel (36), wherein the gearwheel (36) is coupled rotationally conjointly to the shaft (14), in particular is arranged on the shaft (14).

6. Shaft arrangement (10) according to Claim 4 and/or 5, **characterized in that** the guide hub (34) and/or the gearwheel (36) are/is formed in one piece with the shaft (14).

7. Drive arrangement (12) for a vehicle, in particular a motor vehicle, having a shaft arrangement (10) according to one of the preceding claims.

8. Drive arrangement (12) according to Claim 7, **characterized in that** the shaft (14) is an intermediate shaft and the drive arrangement (12) comprises:
- a drive shaft (38), wherein the drive shaft (38) is couplable or coupled to the shaft (14),
- a differential (40) with a differential gear (42), wherein the differential gear (42) is couplable or coupled to the shaft (14), in particular by means of the idler gear (16),
- in particular at least one output shaft (44), wherein the output shaft (44) is couplable or coupled to the differential (40), in particular to the differential gear (42).

9. Vehicle, in particular a motor vehicle, having a drive arrangement (12) according to either of the two preceding claims.

## Revendications

1. Ensemble arbre (10), en particulier pour un ensemble d'entraînement (12), l'ensemble arbre (10) comprenant :
- un arbre (14),
- une roue libre (16),
- un élément de couplage (18), l'élément de couplage (18) étant couplé de manière solidaire en rotation à la roue libre (16), en particulier étant disposé sur la roue libre (16),
- un élément d'embrayage (20), l'élément d'embrayage (20) étant couplé à l'arbre (14) de manière solidaire en rotation et étant mobile le long d'une direction axiale (22) entre une position couplée et une position découplée, la roue libre (16) étant couplée de manière solidaire en rotation à l'arbre (14) dans la position couplée, la roue libre (16) pouvant tourner librement sur l'arbre (14) dans la position découplée, **caractérisé par**
- un disque de support (24) pour le support axial de la roue libre (16), le disque de support (24) étant disposé sur l'arbre (14) de manière axialement adjacente par rapport à la roue libre (16),
- le disque de support (24) comportant un élément d'amortissement élastique (25)
- et l'élément d'amortissement (25) étant disposé sur une face intérieure radiale (26) du disque de support (24).

2. Ensemble arbre (10) selon la revendication précédente, **caractérisé en ce que** l'élément d'amortissement (25) est formé comme un revêtement en caoutchouc (28).

3. Ensemble arbre (10) selon l'une des revendications précédentes, **caractérisé en ce que** l'ensemble arbre (10) comprend une bague de blocage (30) qui vient en prise avec une rainure (32) dans l'arbre (14) pour bloquer axialement le disque de support (24).

4. Ensemble arbre (10) selon l'une des revendications précédentes, **caractérisé en ce que** l'ensemble arbre (10) comporte un moyeu de guidage (34), le moyeu de guidage (34) étant couplé de manière solidaire en rotation à l'arbre (14), en particulier étant disposé sur l'arbre (14), l'élément d'embrayage (20) étant couplé de manière solidaire en rotation à l'arbre (14) au moyen du moyeu de guidage (34).

5. Ensemble arbre (10) selon l'une des revendications précédentes, **caractérisé en ce que** l'ensemble arbre (10) comprend une roue dentée (36), la roue dentée (36) étant couplée de manière solidaire en rotation à l'arbre (14), en particulier étant disposée sur l'arbre (14).

6. Ensemble arbre (10) selon les revendications 4 et/ou 5, **caractérisé en ce que** le moyeu de guidage (34) et/ou la roue dentée (36) sont formés d'un seul tenant avec l'arbre (14).

7. Ensemble d'entraînement (12) pour un véhicule, en particulier un véhicule à moteur, avec un ensemble arbre (10) selon l'une des revendications précédentes.

8. Ensemble d'entraînement (12) selon la revendication 7, **caractérisé en ce que** l'arbre (14) est un arbre intermédiaire et l'ensemble d'entraînement (12) comprend :
- un arbre d'entraînement (38), l'arbre d'entraînement (38) pouvant être couplé ou étant couplé à l'arbre (14),
- un différentiel (40) avec une roue différentielle (42), la roue différentielle (42) pouvant être couplée ou étant couplée à l'arbre (14), en particulier au moyen de la roue libre (16),
- en particulier au moins un arbre de sortie (44), l'arbre de sortie (44) pouvant être couplé ou étant couplé au différentiel (40), en particulier à la roue différentielle (42).

9. Véhicule, en particulier véhicule à moteur, avec un ensemble d'entraînement (12) selon l'une des deux revendications précédentes.
